# EUROPÄISCHE PATENTANMELDUNG

(11) **EP 1 334 929 A1**
(43) Veröffentlichungstag der Anmeldung: **13.08.2003**
(21) Anmeldenummer: 03002377.4
(22) Anmeldetag: 04.02.2003
(51) Int. Cl.: B65G 53/26, B65G 53/60, B65G 53/24, B65D 88/62

(54) **Verfahren und Vorrichtung zum Auffangen und Abtransportieren von Fördergut zur Flugförderung von Feststoffen mittels durch Vakuum erzeugter Luftströmung**

(30) Priorität: 05.02.2002 DE 10204697
(71) Anmelder: Rohr Peter, 83024 Rosenheim (DE)
(72) Erfinder: Rohr Peter, 83024 Rosenheim (DE)

(57) **Zusammenfassung**

Verfahren und Vorrichtung zum Auffangen und Abtransportieren von Fördergut bei an sich bekannten Saugvorrichtungen zur Flugförderung von Feststoffen mittels durch Vakuum erzeugter Luftströmung, bei der die Innenflächen des Auffangbehälters (3) der Saugvorrichtung (1) mit einer beweglich fixierten Gummiauskleidung (5) ausgestattet sind und die Auslassklappen(8) mit an den Rändern überstehenden Gummimatten (9), die sich durch den Unterdruck aneinander saugen versehen sind.

## Beschreibung

Die Erfindung betrifft ein Verfahren und eine Vorrichtung zum Auffangen und Abtransportieren von Fördergut bei an sich bekannten Saugvorrichtungen zur Flugförderung von Feststoffen mittels durch Vakuum erzeugter Luftströmung.
Mit diesem Verfahren und dieser Vorrichtung sollen insbesondere Erdreich, Sand und Kies gefördert werden. Der notwendige Unterdruck kann entweder durch Venturidüsen erzeugt werden, die in der Saugvorrichtung integriert sind und von einem getrennten Kompressor versorgt werden oder durch eine externe Unterdruckpumpe.
Bisher bekannte Saugvorrichtungen (DE 19520692 A1, DE 19825601) saugen das Fördergut in gesonderte Auffangbehälter, die durch einen luftdichten Deckel geöffnet und entleert werden können, um das Material in einen Transport- oder Sammelbehälter umzufüllen. Dabei treten häufig Verschmutzungsprobleme im Inneren der Vorrichtung sowie Abdichtungsprobleme am Deckel durch anhaftendes Erdreich auf, die durch zusätzlichen Reinigungsaufwand behoben werden müssen.

Die Erfindung hat die Aufgabe, ein Verfahren und eine Vorrichtung der eingangs genannten Art so weiterzubilden, daß Abdichtungsprobleme der Vakuumkammer vermieden werden und däß ein möglichst durchgehender Betrieb der Anlage ermöglicht wird.
Diese Aufgabe wird durch ein Verfahren mit den Merkmalen des Patentanspruchs 1 und durch eine Vorrichtung mit den Merkmalen des Patentanspruchs 4 gelöst.

So wird nach Patentanspruch 1 ein Verfahren vorgeschlagen, bei dem eine Saugvorrichtung mit einer gummiartigen Auskleidung ausgestattet ist, die durch Abstandhalter am Anlegen an die Innenwandungen gehindert wird und dadurch den absaugenden Luftstrom nicht unterbricht. Durch die Beweglichkeit der Auskleidung können klebende Verschmutzungen leicht abgeschüttelt werden.

Nach den Patentansprüchen 2 und 3 kann das Verschließen des Saugraumes durch starre Klappen, die mit gummiartigen, an den Rändern überstehenden Matten bedeckt sind geschehen. Die Klappen können von Hand oder mittels bekannter elektrischer, pneumatischer oder hydraulischer Mittel betätigt werden.

Die Vorrichtung kann aufgrund der Klappen, die trotz Verschmutzung und eingeklemmter Fremdkörper immer verläßlich abdichten, ohne dauernde Reinigung betrieben und daher auch fernbedient werden. Da man nun ohne zusätzlichen Aufwand auch in kürzeren Zeitabständen entleeren kann ,ist ein kleinerer Saugbehälter ausreichend und auch aufgrund der externen Druckerzeugung kann die Vorrichtung relativ kompakt und leicht gebaut werden. Dadurch ist sie auch an schwierig zugängliche Stellen transportier- und einsetzbar.
Mit der Saugvorrichtung können Erdschlitze erzeugt werden, z. B. für äußere Vertikalabdichtungen von Gebäudegrundmauern oder zur Verlegung von Versorgungsleitungen, wobei das Erdreich zuvor mit einer Druckluftlanze gelockert wird. Außerdem können Erdaushübe und Materialförderungen, wie z. B. Bekiesungen von Flachdächern durchgeführt werden.

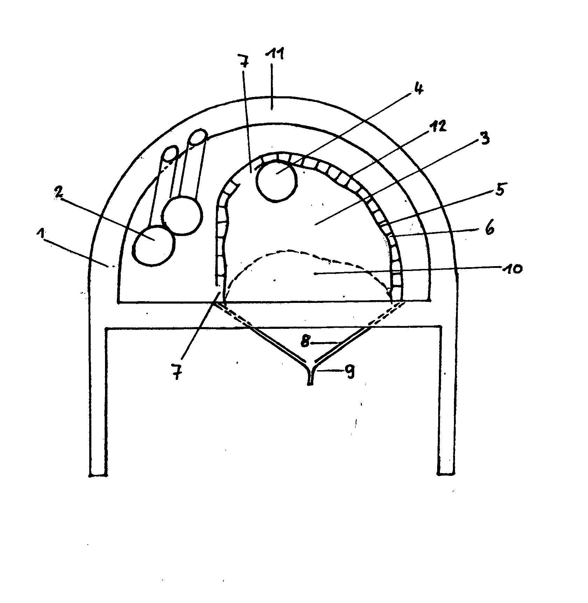

Die Erfindung wird nachfolgend anhand der Figuren an einem Ausführungsbeispiel erläutert.
Bei der Saugvorrichtung nach Figur 1 wird das Fördergut **9** durch einen Schlauch **4** eingesaugt und in einen Auffangbehälter **3** gefördert, der mit einem lose aufgehängten Gummisack **5** ausgekleidet ist. Dieser wird durch ein Metallgitter **6**, das parallel zur Blechhaut des Behälters **3** fixiert ist, auf Abstand gehalten, um den Luftstrom nicht zu behindern.
Dadurch wird erreicht, daß sich klebriges Erdreich nicht direkt an die festen Innenwandungen **12** anlegt und vom beweglichen Gummi **5** leicht wieder abgeschüttelt werden kann.
Sobald der Unterdruck wirkt, schließen sich die Auslassklappen **8** durch die einströmende Luft, die überstehenden Gummimatten **9** werden aneinander gesaugt und dadurch wird der Auffangbehälter dicht verschlossen, auch wenn die Klappen durch Steine, die auf dem Klappenanschlag kleben nicht richtig schließen können.

### Bezugszeichenliste

- **1**: Saugvorrichtung
- **2**: Venturidüse
- **3**: Auffangbehälter
- **4**: Saugschlauchanschluß
- **5**: Gummiauskleidung
- **6**: Abstandhalter
- **7**: Saugluftkanal
- **8**: Auslaßklappe
- **9**: Gummimatte
- **10**: Erdreichaushub
- **11**: Schalldämmung
- **12**: Innenwandung des Auffangbehälters

## Patentansprüche

1. Verfahren zum Auffangen und Abtransportieren von Fördergut bei an sich bekannten Saugvorrichtungen zur Flugförderung von Feststoffen mittels durch Vakuum erzeugter Luftströmung, bei dem der Auffangbehälter(**3**) einer Saugvorrichtung(**1**) mit einer flexiblen Auskleidung(**5**) ausgestattet ist, die verhindert, daß sich klebrige Materialien direkt an den festen Innenwandungen(**12**) anlagern und diese dadurch schwierig zu reinigen sind. Die Anlagerungen können durch Schütteln der gummiartigen Auskleidung(**5**) leicht von dieser gelöst werden. Die notwendige Luftströmung zur Absaugung des Auffangbehälters fließt durch einen Saugluftkanal(**7**) hinter der Gummiauskleidung, der durch Abstandhalter(**6**), z. B. durch ein starres Gitter gebildet wird. Dadurch wird verhindert, daß die Auskleidung durch den Unterdruck an die Behälterwand gesaugt und die Luftströmung unterbrochen wird.

2. Verfahren nach Patentanspruch 1, wobei der Auffangbehälter(**3**) von einer oder mehreren Klappen(**8**) verschlossen wird, die aus starren Platten bestehen und von gummiartigem Matten(**9**) bedeckt werden, die auf allen Seiten über die Platten hinausragen. Diese überstehenden, flexiblen Enden liegen bei geschlossener Klappen aufeinander und werden vom Unterdruck innerhalb der Vorrichtung aneinander gesaugt. Dadurch wird erreicht, daß die Klappen abdichten, auch wenn diese durch eingeklemmte Feststoffe nicht vollständig schließen können.

3. Verfahren nach Patentanspruch 1 und 2, wobei die Klappen entweder durch die Luftströmung beim Einsaugen oder einen gesteuerten Mechanismus geschlossen wird.

4. Vorrichtung zur Durchführung des Verfahrens nach den Patentansprüchen 1 bis 3 mit einer gummiartigen Auskleidung(**5**) des Vakuumraumes, die durch Abstandhalter(**6**) von den Wänden ferngehalten wird und mit Klappen(**8**), die mit gummiartigen Matten(**9**), die über die Ränder hinausragen überzogen sind.
